# EUROPÄISCHE PATENTSCHRIFT

(11) **EP 3 191 356 B1**
(45) Veröffentlichungstag und Bekanntmachung des Hinweises auf die Patenterteilung: **24.10.2018**
(21) Anmeldenummer: 15757462.5
(22) Anmeldetag: 24.08.2015
(51) Int. Cl.: B60W 50/14, B60L 7/12, B60L 15/10, B60L 15/20, B60W 30/18

(54) **VERFAHREN UND VORRICHTUNG ZUM BETREIBEN EINES KRAFTFAHRZEUGS, KRAFTFAHRZEUG**
METHOD AND DEVICE FOR OPERATING A MOTOR VEHICLE, MOTOR VEHICLE
PROCÉDÉ ET DISPOSITIF POUR FAIRE FONCTIONNER UN VÉHICULE AUTOMOBILE, VÉHICULE AUTOMOBILE

(30) Priorität: 10.09.2014 DE 102014218077
(43) Veröffentlichungstag der Anmeldung: 19.07.2017
(73) Patentinhaber: Robert Bosch GmbH, 70442 Stuttgart (DE)
(72) Erfinder: JUNKER, Christoph, 71522 Backnang (DE); AURACHER, Sebastian, 71696 Moeglingen (DE); HERZHAUSER, Erik, 74906 Bad Rappenau - Heinsheim (DE)
(86) Internationale Anmeldenummer: PCT/EP2015/069337
(87) Internationale Veröffentlichungsnummer: WO 2016/037838

(56) Entgegenhaltungen:
- DE-A1-102007 018 733
- DE-A1-102011 011 345
- DE-A1-102011 083 013
- DE-A1-102012 213 321

## Beschreibung

Die Erfindung betrifft ein Verfahren zum Betreiben eines Kraftfahrzeugs, das wenigstens eine elektrische Maschine als Antriebseinrichtung aufweist, bei welchem dem Fahrer des Kraftfahrzeugs eine Empfehlung gegeben wird, wenn er zum Erreichen einer vorgebbaren Zielposition das Kraftfahrzeug ausrollen lassen kann.

Ferner betrifft die Erfindung eine entsprechende Vorrichtung sowie ein Kraftfahrzeug.

### Stand der Technik

Aus dem Stand der Technik und aus dem gattungsbildenden Dokument DE 10 2012 213321 sind Systeme bekannt, die für ein energieeffizientes Ausrollen, beispielsweise für Ausrollereignisse wie Geschwindigkeitsbegrenzungen, Ortseinfahrten oder Kurven, auf Basis von Daten eines Navigationssystems dem Fahrer des Kraftfahrzeugs einen Hinweis geben, wann er mit dem Ausrollen beginnen, also seinen Fuß vom Fahrpedal nehmen kann. Dazu wird mit Hilfe des Navigationssystem die aktuelle Position des Kraftfahrzeugs auf einer virtuellen Karte ermittelt und mit geeigneten Algorithmen die vorausliegende Strecke auf Ausrollereignisse untersucht. Ist ein Ausrollereignis detektiert, wird mit Hilfe eines Modells die Bewegung des Kraftfahrzeugs prädiziert. Stimmt die nun prädizierte Fahrzeuggeschwindigkeit am Beginn des möglichen Ausrollereignisses mit der tatsächlichen Geschwindigkeit beim dem Ausrollereignis überein oder nahezu, so wird dem Fahrer beispielsweise optisch eine Empfehlung gegeben, das Fahrpedal loszulassen. Reagiert der Fahrer nicht sofort so, wird dies dazu führen, dass er an der Zielposition eine zu hohe Geschwindigkeit aufweist und zusätzlich bremsen muss, um eine gewünschte Zielgeschwindigkeit an der Zielposition zu erreichen.

### Offenbarung der Erfindung

Das erfindungsgemäße Verfahren mit den Merkmalen des Anspruchs 1 hat den Vorteil, dass der Fahrer einen größeren zeitlichen Spielraum bei der Umsetzung der Empfehlung "Fuß vom Fahrpedal" hat. Darüber hinaus wird durch einfache Mittel gewährleistet, dass das Kraftfahrzeug an der Zielposition die gewünschte Fahrgeschwindigkeit aufweist. Das erfindungsgemäße Verfahren zeichnet sich durch folgende Schritte aus: Zunächst wird die aktuelle Fahrsituation darauf untersucht, ob in Anhängigkeit der aktuellen Fahrsituation eine Zielposition mit einer Zielgeschwindigkeit durch Ausrollen erreicht werden kann. Ist dies der Fall, wird dem Fahrer ein Hinweis angezeigt. Daraufhin wird eine Reaktionszeit des Fahrers von dem Anzeigen des Hinweises bis zum Einleiten eines Ausrollvorgangs erfasst beziehungsweise gemessen. Und wenn die erfasste Reaktionszeit einen vorgebbare Grenzwert überschreitet, wird die elektrische Maschine als Generator zur Erzeugung eines Verzögerungsmoments gesteuert. Durch den generatorischen Betrieb der elektrischen Maschine wird erreicht, dass wenn der Fahrer erst verspätet reagiert, dennoch die Zielgeschwindigkeit an einer Zielposition erhalten wird, ohne dass der Fahrer ein Bremssystem des Kraftfahrzeugs betätigen muss. Durch das Bereitstellen eines Verzögerungsmoments durch die elektrische Maschine wird außerdem erreicht, dass ein vorhandenes Bremssystem des Kraftfahrzeug nicht genutzt und dadurch eine verschleißarme und insbesondere energieeffiziente Verzögerung des Kraftfahrzeugs zum Erreichen der Zielgeschwindigkeit an der Zielposition erfolgt.

Bevorzugt wird das Verzögerungsmoment derart eingestellt, dass das Fahrzeug auf der Zielposition die Zielgeschwindigkeit aufweist. Bei der Zielgeschwindigkeit kann es sich beispielsweise um die zulässige Maximalgeschwindigkeit einer Ortsdurchfahrt oder auch um eine Geschwindigkeit von 0 km/h, also einen Stillstand des Fahrzeugs handeln, sodass in diesem Fall das Fahrzeug bis zum Stillstehen ausrollt.

Gemäß einer vorteilhaften Weiterbildung der Erfindung ist vorgesehen, dass eine Fahrpedalbetätigung des Fahrers zum Ermitteln der Reaktionszeit überwacht wird. Sobald der Fahrer seinen Fuß vom Fahrpedal nimmt oder das Fahrpedal nicht länger betätigt, wird dies als Reaktion des Fahrers auf den Hinweis gewertet, sodass die Zeit von dem Anzeigen des Hinweises bis zu einem Zeitpunkt, an welchem der Fahrer das Fahrpedal nicht länger betätigt, als die Reaktionszeit erfasst wird. Dies stellt eine besonders einfache und kostengünstige Möglichkeit dar, die Reaktionszeit zu ermitteln.

Ferner ist bevorzugt vorgesehen, dass das Verzögerungsmoment in Abhängigkeit der Entfernung des Kraftfahrzeugs zur Zielposition und von der aktuellen Fahrgeschwindigkeit geregelt wird. Das Verzögerungsmoment wird somit bis zum Erreichen der Zielposition derart geregelt, dass an der Zielposition die gewünschte Zielgeschwindigkeit vorliegt. Dadurch wird erreicht, dass auch bei unvorhergesehenen Ereignissen wie beispielsweise einer Bodenwelle, Rückenwind oder Dergleichen, die Fahrgeschwindigkeit an der Zielposition der Zielgeschwindigkeit entspricht.

Weiterhin ist bevorzugt vorgesehen, dass die Untersuchung der Fahrsituationen in Abhängigkeit von Daten eines Navigationssystems eines Kraftfahrzeugs durchgeführt wird. Mittels der Daten des Navigationssystems wird insbesondere die vorausliegende Strecke beispielsweise auf Steigungen, Kurven oder Fahrbahnbeschaffenheiten geprüft, um den Ausrollvorgang besonders genau prädizieren zu können.

Zusätzlich oder alternativ ist bevorzugt vorgesehen, dass die Untersuchung der Fahrsituation in Abhängigkeit von einer Umfeldsenor des Kraftfahrzeugs durchgeführt wird. In diesem Fall können beispielsweise Kamerasensoren, die Verkehrsschilder oder den vorausliegenden Streckenabschnitt erfassen, dazu genutzt werden, das Ausrollverhalten des Kraftfahrzeug zu prädizieren, oder die durch die Daten des Navigationssystems erfolgte Prädizierung zu plausibilisieren oder zu stützen.

Das erfindungsgemäße Steuergerät mit den Merkmalen des Anspruchs 7 zeichnet sich dadurch aus, dass es beim bestimmungsgemäßen Gebrauch das erfindungsgemäße Verfahren durchführt. Weitere Vorteile im Merkmal ergeben sich aus dem zuvor beschriebenen sowie aus den Ansprüchen.

Das erfindungsgemäße Kraftfahrzeug mit den Merkmalen des Anspruchs 8 zeichnet sich durch das erfindungsgemäße Steuergerät aus.

Im Folgenden soll die Erfindung anhand der Zeichnung näher erläutert werden. Dazu zeigt die einzige
- Figur: ein Verfahren zum Betreiben eines Kraftfahrzeugs in einem Flussdiagramm.

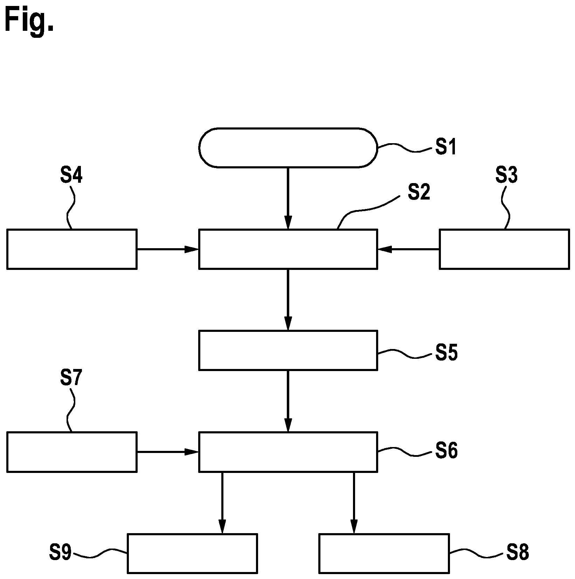

Figur 1 zeigt ein Flussdiagramm anhand dessen ein vorteilhaftes Verfahren zum Betreiben eines Kraftfahrzeugs näher erläutert werden soll. In einem Schritt S1 wird das Verfahren gestartet, wenn das Kraftfahrzeug in Betrieb genommen wird. In einem darauffolgenden Schritt S2 wird die aktuelle Fahrsituation darauf untersucht, ob eine Zielposition mit einer Zielgeschwindigkeit allein durch Ausrollen erreicht werden kann. Dazu werden zunächst die Daten eines Navigationssystems in einem Schritt S3 erfasst, um mögliche Zielpositionen, insbesondere eine mögliche folgende Zielposition auf der aktuellen Fahrstrecke zu ermitteln. Darüber hinaus wird mittels der Daten des Navigationssystems ermittelt, welche Zielfahrgeschwindigkeit an der Zielposition erreich werden soll. So kann es sich bei der Zielposition beispielweise um eine Ortseinfahrt handeln, an welcher eine reduzierte Fahrgeschwindigkeit gesetzlich vorgeschrieben ist. Ebenso kann es sich um ein Stoppschild handeln, bei welchem das Fahrzeug zum Stillstand kommen soll. Die Auswertung in Schritt S2 erfolgt außerdem in Abhängigkeit von der aktuellen Fahrgeschwindigkeit v, die in einem Schritt S4 insbesondere zusammen mit einer Fahrpedalstellung oder mit einer Bremspedalstellung ermittelt wird. Vorzugsweise nur dann, wenn das Bremspedal nicht betätigt ist, wird in dem Schritt S2 ermittelt, ob anhand der nun bekannten Daten ab einer bestimmten Startposition und einer Startgeschwindigkeit, die zumindest annäherungsweise der aktuellen Fahrgeschwindigkeit entspricht, die Zielposition mit der Zielgeschwindigkeit durch Ausrollen des Fahrzeugs erreicht werden kann. Ist dies der Fall, so wird dies in einem Schritt S5 dem Fahrer des Kraftfahrzeugs mitgeteilt. Dazu ist insbesondere vorgesehen, dass dem Fahrer dies optisch, akustisch und/oder haptisch mitgeteilt wird. Es ist beispielsweise vorgesehen, dass dem Fahrer durch eine Anzeigevorrichtung der Hinweis auf das mögliche Ausrollereignis gegeben wird. Auch kann vorgesehen sein, dass ein aktives Fahrpedal vorgesehen ist, das einen Gegendruck, der der Betätigungskraft des Fahrers entgegenwirkt, erhöht wird, um auf das Ausrollereignis hinzuweisen. Mit dem Anzeigen des Hinweises in dem Schritt S5 beginnt außerdem eine Stoppuhr zu laufen, die die Zeit t erfasst, die der Fahrer benötigt, um in einem Schritt S6 auf den Hinweis zu reagieren. Die Reaktion wird insbesondere in Abhängigkeit von der Fahrpedalbetätigung ermittelt. Dazu wird in einem Schritt S7 die Fahrpedalbetätigung insbesondere die Fahrpedalstellung überwacht. Sobald erfasst wird, dass der Fahrer das Fahrpedal nicht länger betätigt, wird die Stoppuhr gestoppt und im Schritt S6 die Reaktionszeit des Fahrers festgelegt. Die ermittelte Reaktionszeit wird mit einem vorgebbaren Grenzwert von vorzugsweise zwischen einer Sekunde und zwei Sekunden, verglichen. Ist die Reaktionszeit kleiner als der vorgebbare Grenzwert, so wird das Kraftfahrzeug in einem Schritt S8 ausgerollt, sofern der Fahrer nicht wieder das Fahrpedal oder das Bremspedal betätigt.

Überschreitet die Reaktionszeit jedoch den vorgebbaren Grenzwert, so wird in einem Schritt S9 eine elektrische Maschine des Kraftfahrzeugs, die als Antriebsmaschine vorgesehen ist, in einen generatorischen Betrieb geschaltet. Dabei wird der elektrischen Maschine ein Verzögerungsmoment vorgegeben, das in Abhängigkeit von der aktuellen Fahrgeschwindigkeit, der Entfernung zu der Zielposition sowie der Zielgeschwindigkeit berechnet wird. Insbesondere werden dabei auch Daten des Navigationssystems bezüglich der Fahrstrecke, die zum Erreichen der Zielposition befahren werden muss, berücksichtigt. Dabei wird das Verzögerungsmoment derart bestimmt, dass das Kraftfahrzeug an der Zielposition die Zielgeschwindigkeit erreicht. Folgt der Fahrer des Kraftfahrzeugs also dem Hinweis nicht sofort und leitet stattdessen den Ausrollvorgang zu einem späteren Zeitpunkt ein, so wird das Verfahren, insbesondere in Form eines Ausrollreglers, aktiv, um die Ausrollgeschwindigkeit mit Hilfe des Verzögerungsmoments der elektrischen Maschine zu regeln.

Dabei wird das Verzögerungsmoment kontinuierlich ermittelt, um an der Zielposition die gewünschte Zielgeschwindigkeit zu erreichen. Obwohl der Fahrer der Empfehlung beziehungsweise dem Hinweis nicht sofort gefolgt ist, weist das Kraftfahrzeug dadurch trotzdem an der Zielposition eine der Zielgeschwindigkeit entsprechende Fahrgeschwindigkeit auf. Da für diese Verzögerung des Kraftfahrzeugs keine Bremseingriffe mit einer mechanischen Bremse nötig sind, wird ein verschleißfreies Verzögern des Kraftfahrzeugs gewährleistet. Darüber hinaus wird während des generatorischen Betriebs der elektrischen Maschinen ein elektrischer Speicher des Kraftfahrzeugs aufgeladen, sodass die Verzögerungsenergie gespeichert und zu einem späteren Zeitpunkt zum Antreiben des Kraftfahrzeugs genutzt werden kann.

Das Kraftfahrzeug weist vorzugsweise eine Hybridantriebsvorrichtung auf, die neben der elektrischen Maschine auch eine Brennkraftmaschine und gegebenenfalls eine weitere elektrische Maschine als Antriebsmaschinen aufweist. Außerdem weist das Kraftfahrzeug, vorzugsweise wie üblich, auch ein herkömmliches, insbesondere hydraulisches Bremssystem zum Erzeugen eines Bremsmomentes bei einer Bremspedalbetätigung auf.

## Patentansprüche

1. Verfahren zum Betreiben eines Kraftfahrzeugs, dass wenigstens eine elektrische Maschine als Antriebseinrichtung aufweist, mit folgenden Schritten:
- Untersuchen einer aktuellen Fahrsituation darauf, ob eine Zielposition mit einer Zielgeschwindigkeit durch Ausrollen erreicht werden kann (S2);
- Anzeigen eines Hinweises an einen Fahrer des Kraftfahrzeugs, wenn die Zielposition durch Ausrollen erreicht werden kann (S5);
**dadurch gekennzeichnet, dass** das Verfahren folgende Schritte aufweist:
- Erfassen einer Reaktionszeit des Fahrers von dem Hinweis bis zum Einleiten eines Ausrollvorgang durch den Fahrer (S6);
- Ansteuern der elektrischen Maschine als Generator zur Erzeugung eines Verzögerungsmoments, wenn die Reaktionszeit einen vorgebbaren Grenzwert überschreitet (S9).

2. Verfahren nach Anspruch 1, **dadurch gekennzeichnet, dass** das Verzögerungsmoment derart eingestellt wird, dass das Fahrzeug an der Zielposition die Zielgeschwindigkeit aufweist.

3. Verfahren nach einem der vorhergehenden Ansprüche, **dadurch gekennzeichnet, dass** eine Fahrpedalbetätigung des Fahrers zum Ermitteln der Reaktionszeit überwacht wird.

4. Verfahren nach einem der vorhergehenden Ansprüche, **dadurch gekennzeichnet, dass** das Verzögerungsmoment in Abhängigkeit von der Entfernung des Kraftfahrzeugs zur Zielposition und von der aktuellen Fahrgeschwindigkeit geregelt wird.

5. Verfahren nach einem der vorhergehenden Ansprüche, **dadurch gekennzeichnet, dass** die Untersuchung in Abhängigkeit von Daten eines Navigationssystems des Kraftfahrzeugs durchgeführt wird.

6. Verfahren nach einem der vorhergehenden Ansprüche, **dadurch gekennzeichnet, dass** die Untersuchung in Abhängigkeit von einer Umfeldsensorik des Kraftfahrzeugs durchgeführt wird.

7. Vorrichtung zum Betreiben eines Kraftfahrzeugs, das wenigstens eine elektrische Maschine als Antriebeinrichtung aufweist, **gekennzeichnet dadurch, dass** die Vorrichtung ein Steuergerät zur Durchführung eines Verfahren nach einem der Ansprüche 1 bis 6 aufweist.

8. Kraftfahrzeug mit wenigstens einer elektrischen Maschine als Antriebseinrichtung, **gekennzeichnet dadurch, dass** das Kraftfahrzeug eine Vorrichtung nach dem Anspruch 7 aufweist.

## Claims

1. Method for operating a motor vehicle which has at least one electric machine as a driving device, comprising the following steps:
- examining a current driving situation to determine whether a target position can be reached with a target speed by coasting (S2);
- displaying a message to a driver of the motor vehicle if the target position can be reached by coasting (S5);
**characterized in that** the method has the following steps:
- detecting a reaction time of the driver from the message up to the initiation of a coasting process by the driver (S6); and
- actuating the electric machine as a generator to generate a deceleration torque if the reaction time exceeds a predefinable limiting value (S9).

2. Method according to Claim 1, **characterized in that** the deceleration torque is set in such a way that the vehicle is at the target speed at the target position.

3. Method according to one of the preceding claims, **characterized in that** an accelerator pedal activation by the driver is monitored in order to determine the reaction time.

4. Method according to one of the preceding claims, **characterized in that** the deceleration torque is regulated as a function of the distance of the motor vehicle from the target position and from the current velocity.

5. Method according to one of the preceding claims, **characterized in that** the examination is carried out as a function of data of a navigation system of the motor vehicle.

6. Method according to one of the preceding claims, **characterized in that** the examination is carried out as a function of a surroundings sensor system of the motor vehicle.

7. Device for operating a motor vehicle which has at least one electric machine as a driving device, **characterized in that** the device has a control unit for carrying out a method according to one of Claims 1 to 6.

8. Motor vehicle having at least one electric machine as a driving device, **characterized in that** the motor vehicle has a device according to Claim 7.

## Revendications

1. Procédé pour faire fonctionner un véhicule automobile, qui présente au moins une machine électrique comme dispositif d'entraînement, présentant les étapes suivantes:
- rechercher dans une situation de roulage actuelle si une position cible peut être atteinte avec une vitesse cible par décélération en roue libre (S2);
- afficher une information pour un conducteur du véhicule automobile, lorsque la position cible peut être atteinte par décélération en roue libre (S5);
**caractérisé en ce que** le procédé présente les étapes suivantes:
- détecter un temps de réaction du conducteur depuis l'information jusqu'au lancement d'un processus de décélération en roue libre par le conducteur (S6);
- commander la machine électrique en tant que générateur pour la production d'un couple de ralentissement, lorsque le temps de réaction dépasse une valeur limite prévisible (S9).

2. Procédé selon la revendication 1, **caractérisé en ce que** l'on règle le couple de ralentissement de telle manière que le véhicule présente la vitesse cible à la position cible.

3. Procédé selon l'une quelconque des revendications précédentes, **caractérisé en ce que** l'on surveille un actionnement de la pédale des gaz par le conducteur pour déterminer le temps de réaction.

4. Procédé selon l'une quelconque des revendications précédentes, **caractérisé en ce que** l'on régule le couple de ralentissement en fonction de l'éloignement du véhicule automobile de la position cible et de la vitesse de roulage actuelle.

5. Procédé selon l'une quelconque des revendications précédentes, **caractérisé en ce que** l'on effectue la recherche en fonction de données d'un système de navigation du véhicule automobile.

6. Procédé selon l'une quelconque des revendications précédentes, **caractérisé en ce que** l'on effectue la recherche en fonction de capteurs d'environnement du véhicule automobile.

7. Dispositif pour faire fonctionner un véhicule automobile, qui présente au moins une machine électrique comme dispositif d'entraînement, **caractérisé en ce que** le dispositif présente un appareil de commande pour la mise en oeuvre d'un procédé selon l'une quelconque des revendications 1 à 6.

8. Véhicule automobile avec au moins une machine électrique comme dispositif d'entraînement, **caractérisé en ce que** le véhicule automobile présente un dispositif selon la revendication 7.
